Europäisches Patentamt

European Patent Office

Office européen des brevets

(19)

(11) EP 1 324 592 A1

(12) EUROPEAN PATENT APPLICATION

(43) Date of publication:
02.07.2003 Bulletin 2003/27

(51) Int Cl.$^7$: H04N 5/217, H04N 3/15

(21) Application number: 01310582.0

(22) Date of filing: 19.12.2001

(84) Designated Contracting States:
AT BE CH CY DE DK ES FI FR GB GR IE IT LI LU
MC NL PT SE TR
Designated Extension States:
AL LT LV MK RO SI

(71) Applicant: STMicroelectronics Limited
Marlow, Buckinghamshire SL7 1YL (GB)

(72) Inventors:
• Findlater, Keith
  Edinburgh, EH10 6AQ (GB)
• Hurwitz, Jonathan Ephriam David
  Collinton Village Edinburgh EH13 0JT (GB)

(74) Representative: Cooper, John et al
Murgitroyd & Company
165-169 Scotland Street
Glasgow G5 8PL (GB)

(54) **Image sensor with improved noise cancellation**

(57)    A solid state image sensor has a pixel array (80) of active pixel type using three transistors plus a photodiode per pixel. Pixel reset values are read out one row at a time and stored in a frame store (83). Pixel signal values are read out a row at a time. The stored reset values are subtracted, for example by a read/write/modify circuit (84) to remove kTC noise. The readout of reset and signal values for are interleaved, and the offset between read and reset for each row is selected to control frame exposure.

Fig. 1

## Description

This invention relates to solid state image sensors having improved noise cancellation.

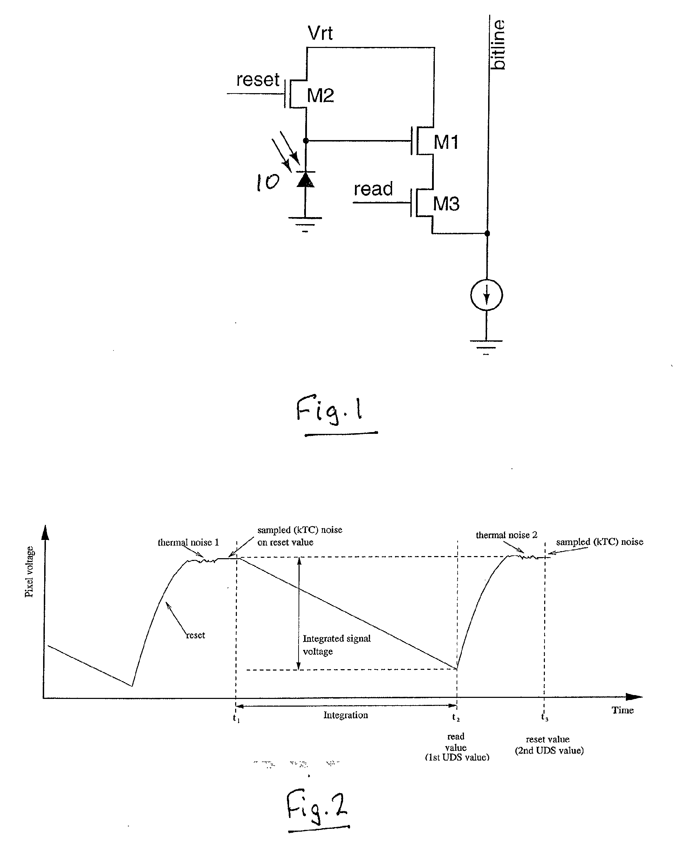

The invention is particularly applicable to active pixel image sensors (APS) using a three transistor plus photodiode pixel. One pixel of such a sensor is shown in Figure 1. A photodiode 10 is employed as a capacitor on which photo-generated carriers are integrated. Typically, the photodiode 10 is reset to a voltage Vrt using a transistor M2, is discharged by the photocurrent, and is read via a transistor M3. Reset noise, also known as kTC noise, results from the sampling of the thermal noise from the transistor M2 onto the pixel capacitance when the photodiode 10 is reset. This noise is time-varying, as the photodiode voltage will be different each time it is reset.

The noise introduced during a single reset has a root mean square voltage of:

$$V_{reset} = \sqrt{(kT/C)}$$

if the reset transistor is operating in strong inversion (hard reset) during reset, where C is the pixel photodiode capacitance, k is Boltzmann's constant, and T is the absolute temperature. If the reset transistor is operated in weak inversion (soft reset), the noise is reduced by a factor of $\sqrt{2}$.

It is common to correct for fixed pixel offsets by storing the read voltage, storing the reset voltage, and taking the difference between these two. While this technique removes the fixed pixel offsets, such as from the pixel source follower transistor threshold voltage variation, it introduces two amounts of reset noise. This is because the pixel value after integration contains the noise from the previous reset, and when the pixel is reset after integration the reset noise from the second reset is not correlated with the noise from the reset prior to integration. This technique is commonly referred to in the literature of three-transistor active pixel sensors as "correlated-double-sampling"; this is incorrect as the temporal noise in the two samples is not correlated. Accordingly, this technique is referred to herein as "uncorrelated-double-sampling" (UDS).

It can be shown that in UDS the RMS value of the total noise in the output signal is $\sqrt{(2kT/C)}$. For a pixel photodiode capacitance of 4 fF, a value of 1.44 mV at the photodiode for this noise source is obtained. Under low light conditions this can be the dominant noise source in the image and causes significant degradation in signal-to-noise ratio. It is therefore very desirable to eliminate this noise source.

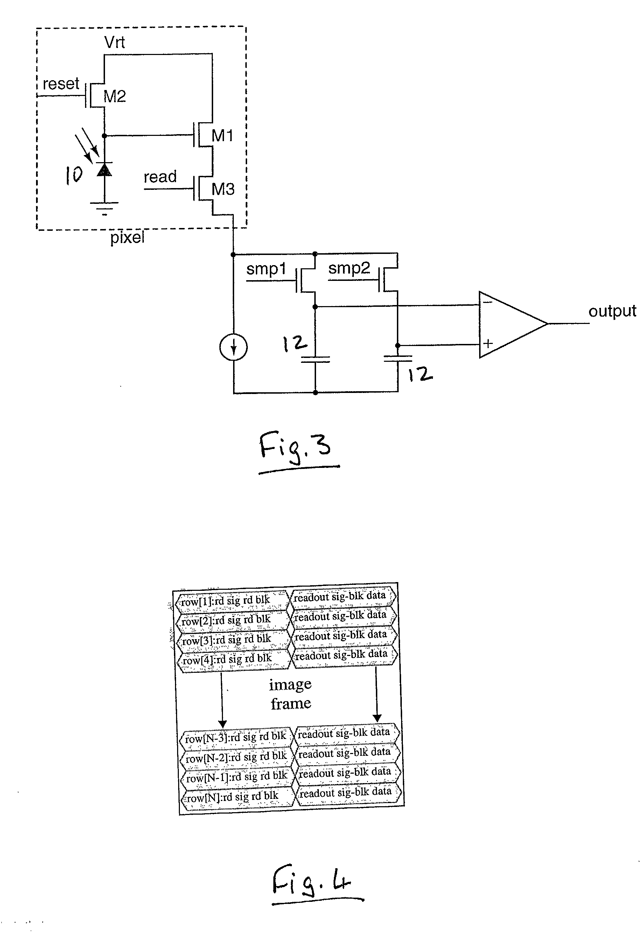

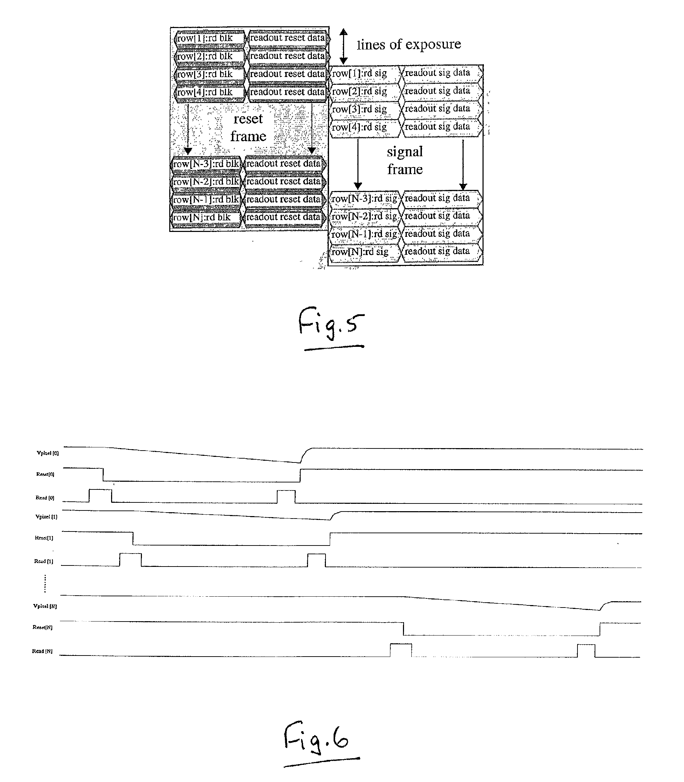

Figure 2 shows reset and read timing for UDS, while Figure 3 shows a typical UDS readout circuit and Figure 4 illustrates the readout of an image frame in standard UDS. The two values at $t_2$ and $t_3$ are close together in time, typically 1 - 10 $\mu$s apart, whilst $t_1$ and $t_2$

could be up to an entire frame time apart. This allows a single row's worth of sample and hold capacitors, such as 12 (Figure 3), to be used to store the values at $t_2$ and $t_3$ and subtract them during readout from the image sensor. It is not possible to store the value from $t_1$ in this way, since between time $t_1$ and $t_2$ there will be many more resets for the pixels of the other rows in the array, and these values would have to be stored as well. As there are only two sample and hold capacitors per row there is nowhere to store the other values. Adding enough sample and hold capacitors to store all the required values is not feasible due to the large size of these capacitors.

US Patent 5,926,214 (Denyer et al) discloses a method of performing true correlated-double-sampling, that is an arrangement in which the actual reset value of every pixel is stored before integration and then subtracted from the read value of that pixel. However, the method disclosed by Denyer et al relies upon the use of a mechanical shutter, which adds cost and complexity to the camera, and in certain cases the use of a mechanical shutter may not be possible due to, for example, space constraints.

The present invention seeks to improve upon the prior art by enabling true correlated-double-sampling without the use of mechanical elements.

Accordingly, the present invention provides a solid state image sensor as defined in claim 1. Other aspects of the invention provide a camera including such a solid state image sensor, and a method of operating a solid state image sensor as defined in claim 6.

Preferred features of the invention will be apparent from the description and claims.

An embodiment of the present invention will now be described, by way of example only, with reference to the drawings, in which:

Figures 1 to 4 relate to the prior art, as discussed above;
Figure 5 shows the readout of an image frame in one system embodying the invention;
Figure 6 shows the timings of reset and read for pixel array rows;
Figure 7 illustrates output data frames under different exposures;
Figure 8 is a block diagram of the image sensor system of this embodiment; and
Figure 9 is a block diagram illustrating one form of exposure control.

The present invention allows reset noise to be cancelled without the use of a mechanical shutter. A rolling electronic exposure control is implemented using the pixel reset transistors; this is the same as in a standard 3-transistor active pixel sensor timing. However, the timing of the sensor readout is arranged to allow both read and reset data to be interleaved, which allows reset noise cancellation to be performed while giving control over exposure of the pixels.

Figures 5 and 6 show an example in which the readout of signal data for a given row is offset by three line periods from the equivalent reset data. That is, signal data for row [1] is read out after the reset data for row [3], signal data for row [2] is read out after the reset data for row [4], and so on.

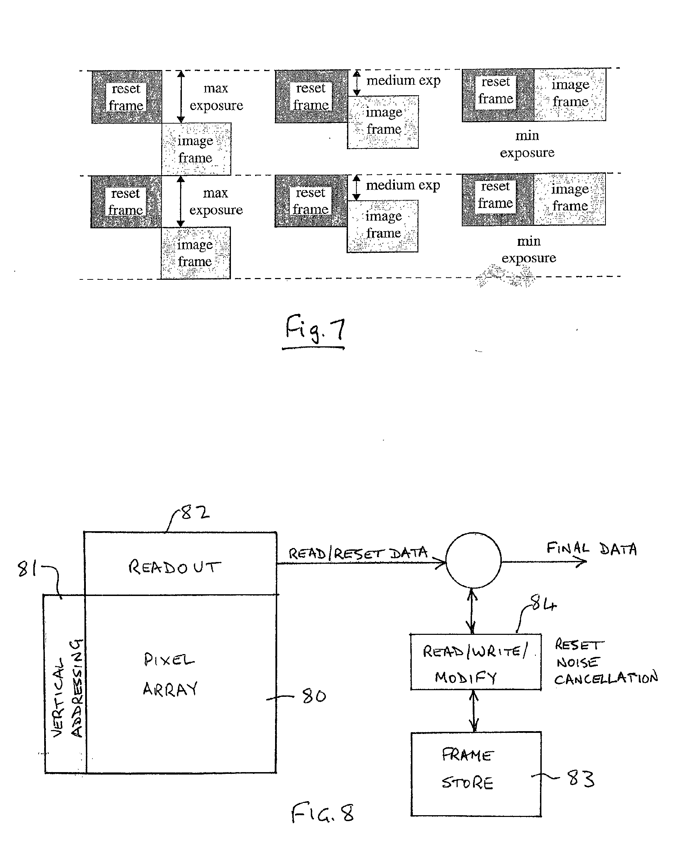

As seen in Figure 7, the timing offset between the readout of reset and signal data for any given line can be varied from a whole frame, giving maximum exposure, to nil (i.e. signal data immediately following reset data) for minimum exposure. This requires the ability to store an entire frame of pixel reset values.

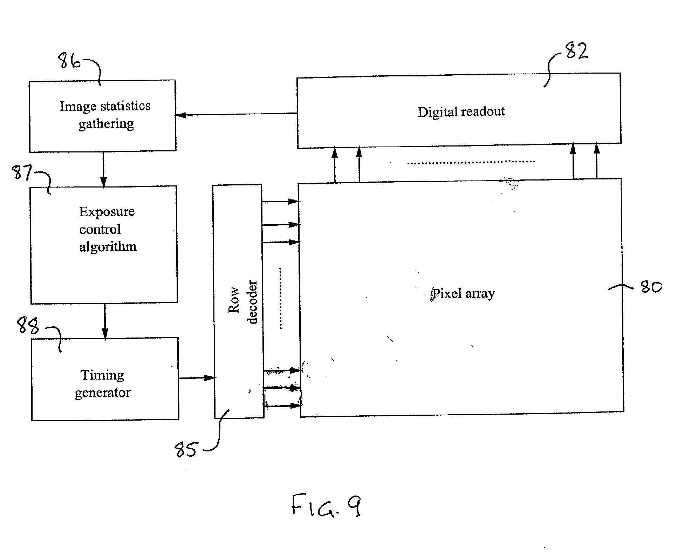

Figure 8 shows one implementation of the system. The pixel array 80 has vertical addressing circuits 81 and readout circuits 82 of known type. Read and reset data are stored in a frame store memory 83. A read/modify/write circuit 84 is used to perform the subtractions required to cancel the noise. Preferably, the frame store 83 is in the form of a dynamic RAM, and the readout from the pixel array uses a per-column analog to digital converter architecture.

The entire system shown in Figure 8 could be implemented on a single chip. Alternatively, the system could be implemented on more than one chip, for example with the frame store forming a separate chip. A further possibility is to implement the frame store and/or the read/write/modify circuit by means of software on a general purpose computing circuit.

Referring to Figure 9, there is shown one example of exposure control in the form of a digital logic control loop. The pixel array 80 and readout circuit 82 are as before. The reset and readout pulses are provided by a row decoder 85 (a shift register architecture could also be used) which is controlled by a digital circuit. Statistics on the image data are gathered at 86 and are used as inputs to an algorithm circuit 87 operating an exposure control algorithm to control a timing generator 88 which sets the gap between the reset and read control pulses according to the exposure value from the algorithm.

Alternatively, exposure control could be implemented by software.

The embodiments described offset the reset and read times by a complete number of pixel rows. This is convenient, but not essential. The offset could include part rows, and could be defined as a time period rather than a number of rows.

The embodiments also describe direct subtraction of reset from readout values for a given pixel. Direct subtraction may be replaced or augmented by mathematical manipulation of the reset and/or read data. For example, the reset and read data could undergo compression before subtraction occurs.

In the present invention, because the actual pixel reset noise is subtracted from the signal value, the output is the true integrated photocurrent with kTC noise eliminated. A secondary advantage is that any other noise injected onto the voltage supply to the pixel is also stored and eliminated, which greatly improves the power supply noise immunity of the system.

The requirement for a frame store may be seen as a disadvantage over alternative techniques such as the 4-transistor pinned photodiode (4-T) pixel. However, the invention is compatible with standard CMOS technology, whereas the 4-T pixel requires a specialised manufacturing technology.

**Claims**

1. An image sensor circuit arrangement comprising a solid state image sensor having an image plane formed by an array of pixels, each pixel comprising a light-sensitive capacitance, reset means for resetting the capacitance from a given voltage source, first readout means for reading out the pixel reset value, and second readout means for reading out the pixel signal value;

   the image sensor circuit arrangement further comprising a frame store, a readout circuit for transferring pixel reset values to the frame store, and subtraction means for subtracting the stored reset value of each pixel from the readout signal value of the same pixel;
   and in which the readout circuit is operative to interleave signal values from rows of pixels with reset values from rows of pixels with a selected offset between the reset and signal values of each row whereby to control exposure.

2. The circuit arrangement of claim 1, in which the frame store, the readout circuit and the subtraction means form part of a single integrated circuit with the image sensor.

3. The circuit arrangement if claim 1, in which the frame store is located in a solid state circuit separate from the image sensor.

4. The circuit arrangement of claim 1, in which the frame store is implemented by software on a computing means.

5. The circuit arrangement of any preceding claim, in which said offset is a number of rows selected from zero to the entire frame.

6. The circuit arrangement of any preceding claim, in which the frame store is capable of holding the reset values of the pixels of the entire frame.

7. The circuit arrangement of any preceding claim, in which the subtraction means is a read/modify/write circuit.

**8.** The circuit arrangement of any preceding claim, in which the readout circuit includes, for each row, a pair of sample-and-hold capacitors and a digital to analog converter.

**9.** A method of operating a solid state image sensor having an image field comprising an array of pixels, each pixel comprising a light-sensitive capacitance, and reset means for resetting the capacitance from a given voltage source; the method comprising:

(a) resetting the pixels of a first row;
(b) reading out and storing the pixel reset values of the row;
(c) repeating steps (a) and (b) for subsequent rows;
(d) reading out the signal values of the pixels of the first row interleaved with the reading out of rows of pixel reset values, said reading out being separated from the reading out of the pixel reset values of the first row by a selected time;
(e) repeating step (d) for subsequent rows; and
(f) subtracting the stored reset value of each pixel from the signal value of the same pixel and outputting the result as a noise-cancelled signal value.

**10.** A method according to claim 9, in which said selected time is a selected number of rows of readout.

**11.** A method according to claim 10, in which said selected number of rows can be selected within the range zero to whole frame.

**12.** A method according to any of claims 9 to 11, in which said subtraction is replaced or augmented by mathematical manipulation of the reset and/or signal data.

**13.** A camera including an image sensor circuit arrangement as claimed in any of claims 1 to 8.

Vrt

reset M2

M1

10

read M3

bitline

**Fig.1**

Pixel voltage

thermal noise 1

sampled (kTC) noise
on reset value

thermal noise 2

sampled (kTC) noise

reset

Integrated signal
voltage

$t_1$

Integration

$t_2$

$t_3$

Time

read
value
(1st UDS value)

reset value
(2nd UDS value)

**Fig.2**

Fig.3

image
frame

Fig. 4

Fig. 5

Fig. 6

Fig. 7

FIG. 8

86 — 82

| Image statistics gathering | | Digital readout |
|---|---|---|

87

| Exposure control algorithm |
|---|

88

| Timing generator |
|---|

Row decoder

85

Pixel array

80

FIG. 9

**European Patent Office**

## EUROPEAN SEARCH REPORT

Application Number

EP 01 31 0582

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 243 134 B1 (BEILEY MARK A) 5 June 2001 (2001-06-05) * column 1, line 66 - column 2, line 15 * * column 5, line 11 - line 33 * * column 5, line 61 - column 6, line 26 * | 1,9 | H04N5/217 H04N3/15 |
| Y | | 3 | |
| D,Y | US 5 926 214 A (BAXTER DONALD JAMES ET AL) 20 July 1999 (1999-07-20) * column 2, line 4 - line 39 * | 3 | |

**TECHNICAL FIELDS SEARCHED (Int.Cl.7)**

H04N

*The present search report has been drawn up for all claims*

| Place of search | Date of completion of the search | Examiner |
|---|---|---|
| THE HAGUE | 23 May 2002 | Bequet, T |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 01 31 0582

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2002

| Patent document cited in search report | | Publication date | Patent family member(s) | | Publication date |
|---|---|---|---|---|---|
| US 6243134 | B1 | 05-06-2001 | AU<br>TW<br>WO<br>US | 2464799 A<br>401685 B<br>9944359 A1<br>2001007471 A1 | 15-09-1999<br>11-08-2000<br>02-09-1999<br>12-07-2001 |
| US 5926214 | A | 20-07-1999 | GB | 2317522 A | 25-03-1998 |

EPO FORM P0459

For more details about this annex : see Official Journal of the European Patent Office, No. 12/82